# EUROPÄISCHE PATENTSCHRIFT

(11) **EP 1 204 192 B1**
(45) Veröffentlichungstag und Bekanntmachung des Hinweises auf die Patenterteilung: **21.05.2008**
(21) Anmeldenummer: 01114081.1
(22) Anmeldetag: 09.06.2001
(51) Int. Cl.: H02K 5/26

(54) **Befestigungsvorrichtung für Elektromotoren, insbesondere Spaltpolmotoren**
Mounting assembly for electric motors, in particular for shade- pole motors
Ensemble de montage pour moteurs électriques, en particulier pour moteurs à pôles fendus

(30) Priorität: 14.10.2000 DE 10051060
(43) Veröffentlichungstag der Anmeldung: 08.05.2002
(73) Patentinhaber: Glems-Technik GmbH, 71254 Ditzingen (DE)
(72) Erfinder: Scherer, Wolfgang, 71229 Leonberg (DE)
(74) Vertreter: Kratzsch, Volkhard

(56) Entgegenhaltungen:
- EP-A- 0 560 493
- US-A- 1 822 342
- US-A- 3 983 429
- US-A- 4 033 531
- US-A- 4 859 889
- PATENT ABSTRACTS OF JAPAN vol. 015, no. 479 (E-1141), 5. Dezember 1991 (1991-12-05) -& JP 03 207233 A (SHIBAURA ENG WORKS CO LTD), 10. September 1991 (1991-09-10)

## Beschreibung

Die Erfindung bezieht sich auf einen Elektromotor, insbesondere Spaltpolmotor, mit einer Befestigungsvorrichtung zur Befestigung an einer Halterung, z. B. an einem Standfuß, gemäß dem Wortlaut des Oberbegriffs des Patentanspruchs 1.

Für die Befestigung von Elektromotoren, z. B. Spaltpolmotoren, die einen Ventilator antreiben und einem Bauteil, z. B. einem Verdampfer oder einem Kondensator einer Kältemaschine zugeordnet werden, werden unterschiedliche räumliche Bedingungen und Befestigungsmaße vorgegeben, u. a. auch bei der für die Befestigung an einem Teil dienenden Halterung, z. B. in Form eines Standfußes, die z. B. mit zwei unterschiedlichen Lochmaßen für den Durchgriff von Befestigungsmittels, insbesondere Befestigungsschrauben, versehen ist. In Anpassung daran müssen motorseitig ebenfalls Vorkehrungen für eine entsprechende geeignete Befestigung getroffen werden. Dies ist sehr kostenaufwendig.

Eine bekannte Befestigungsvorrichtung für Elektromotoren (US 4033531) besteht aus jeweils zwei seitlich am äußeren Umfang des Elektromotors angreifenden winkelförmigen Haltern, zwischen denen der Elektromotor mittels eines Haltebandes aufgenommen ist, das den Elektromotor auf seinem Umfang umschlingt und mit den vertikalen Schenkeln der beidseitigen Halter verbunden ist. Die beidseitigen Halter werden mit ihren horizontalen Winkelschenkeln mit Hilfe von Schrauben an einer Halterung, z. B. einer bodenseitigen Tragfläche, befestigt. Die horizontalen Winkelschenkel enthalten Löcher für den Durchgriff der Befestigungsschrauben und außerdem jeweils eine Reihe von Langlöchern, die etwa parallel zur Motorachse ausgerichtet ist. Die vertikalen Winkelschenkel enthalten in vertikalen Reihen angeordnete Langlöcher und ferner quer dazu gerichtete Langlöcher. Diese eröffnen vielfältige Befestigungsmöglichkeiten für die Befestigung des Motors unmittelbar an diesen vertikalen Schenkeln oder an Schenkelverlängerungen, die an diesen vertikalen Schenkeln befestigt werden können.

Aus US 4859889 ist eine Befestigungsvorrichtung für Elektromotoren bekannt, bei der der Elektromotor auf einer unterseitig platzierten, schalenartigen Halterung aufliegt, die an den unteren Krümmungsbereich des Motorgehäuses wannenartig angepasst ist. Die schalenartige Halterung ruht auf einem darunter befindlichen Fußgestell mit schalenartigem Mittelteil und beidseitig davon wegragenden Fußleisten, die Löcher für eingreifende Befestigungsmittel aufweisen.

Aus US 3983429 ist eine Befestigungsvorrichtung für einen Elektromotor bekannt, die aus zwei in Richtung der Motorachse zusammensetzbaren und mittels Schrauben, die zugleich zur Befestigung an einer Halterung dienen, verbindbaren Konsolen bestehen. Jede Konsole weist einen horizontalen unteren Winkelschenkel auf, der beidseitig abstrebende Randstreifen trägt, die jeweils mehrere quer zur Achse des Motors gerichtete Langlöcher für die Befestigung aufweisen. Ferner hat jede Konsole einen vertikal nach oben gerichteten Winkelschenkel, der zur unterseitigen Abstützung des Elektromotors im Bereich der zugewandten Stirnseite und ferner zur Aufnahme beidseitiger Spannbügel dient, die den Elektromotor oberseitig auf der Stirnseite umfassen und zum Festspannen am vertikalen Winkelschenkel jeder Konsole dienen.

Der Erfindung liegt die Aufgabe zugrunde, einen Elektromotor, insbesondere für Spaltpolmotoren, mit einer Befestigungsvorrichtung der eingangs genannten Art zu schaffen, die eine Befestigung des Elektromotors an einer Halterung, z.B. in Form eines Standfußes, bei unterschiedlichen Abmessungen und sonstigen Gegebenheiten wesentlich vereinfacht, ohne dass es dazu zwingend erforderlich ist, motorseitig entsprechende Vorkehrungen zu treffen.

Die Aufgabe ist bei einem Elektromotor mit Befestigungsvorrichtung der eingangs genannten Art gemäß der Erfindung durch die Merkmale im Anspruch 1 gelöst. Diese Befestigungsvorrichtung erlaubt bei der Befestigung eines Elektromotors an einer Halterung z.B. in Form eines Standfußes die Berücksichtigung unterschiedlicher Lochabstände und dergleichen Raumgegebenheiten, ohne dass diese bereits motorseitig mit besonders hohem Aufwand berücksichtigt werden müssen. Die Befestigungsvorrichtung stellt einen Adapter dar, der zwischen dem Elektromotor und der Halterung eine Anpassung an die verschiedensten Maße und Gegebenheiten ermöglicht.

Weitere besondere Merkmale der Erfindung sowie Einzelheiten und Ausgestaltungen dieser ergeben sich aus den Unteransprüchen. Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern stattdessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand eines Ausführungsbeispieles in den Zeichnungen näher erläutert. Es zeigen:
- Fig. 1: eine schematische Draufsicht einer Befestigungsvorrichtung für Elektromotoren, angebracht an einem Standfuß,
- Fig. 2: eine schematische Seitenansicht lediglich der Befestigungsvorrichtung in Pfeilrichtung II in Fig. 1,
- Fig. 3: eine schematische Seitenansicht der Befestigungsvorrichtung in Pfeilrichtung III in Fig. 1,
- Fig. 4: eine schematische teilweise geschnittene Seitenansicht der Befestigungsvorrichtung mit Standfuß in Pfeilrichtung IV in Fig. 1, wobei die Befestigungsvorrichtung an einem zu befestigenden Elektromotor angebracht ist,
- Fig. 5: eine schematische Ansicht der Unterseite der Befestigungsvorrichtung in Fig. 1 ohne Standfuß.

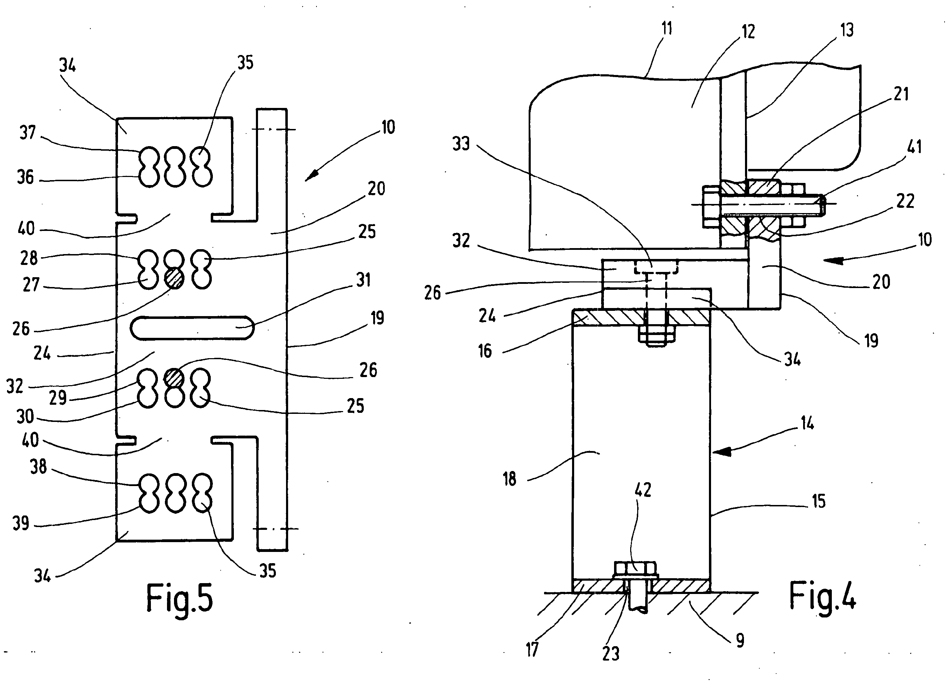

In den Zeichnungen ist eine Befestigungsvorrichtung 10 gezeigt, die für die Befestigung eines Elektromotors 11, z.B. eines Spaltpolmotors, eines elektronisch kommutierten Permanentmagnet-Motors (PM-EC-Motors) od. dgl., an einer Halterung 14 dient, mittels der die Befestigung dann an irgendeinem nur in Fig. 4 schematisch angedeutetem Teil 9 geschieht. Der Elektromotor 11 weist ein dort nur schematisch angedeutetes Motorgehäuse 12 mit einem sichtbaren, auf der rechten Seite dieses angebrachten Lagerendschild 13 auf. Ein auf der linken Seite des Motorgehäuses 12 ebenfalls vorhandenes Lagerendschild ist nicht sichtbar. Das Lagerendschild 13 ist am übrigen Teil des Motorgehäuses 12 z.B. mittels Schrauben 41 verschraubt. Die Schrauben 41 können auch vom nicht gezeigten einen Lagerendschild bis zum sichtbaren anderen Lagerendschild 13 hindurchreichen und beide mit dem übrigen Teil des Motorgehäuses 12 verbinden.

Die Halterung 14, mittels der die Befestigung des Elektromotors 11 an irgendeinem Teil 9 mittels angedeuteter Schrauben 42 geschieht, liegt als fertiges Bauteil vor. Sie besteht aus einem Standfuß 15, der etwa U-förmig gestaltet ist und einen die U-Basis bildenden oberen Schenkel 16 sowie zwei davon abstrebende beidseitige und in Abstand voneinander verlaufende Seitenschenkel 18 aufweist, von denen jeder am Ende einen nach außen abgebogenen unteren Schenkel 17 mit einem darin enthaltenen Langloch 23 für den Durchgriff jeweils einer Schraube 42 aufweist.

Die Befestigungsvorrichtung 10 ist am Elektromotor 11, insbesondere am Lagerendschild 13, unter Verwendung der vorhandenen Schrauben 41 befestigt und dient als Adapter für die Befestigung des Elektromotors 11 an der Halterung 14. Die Halterung 14 hat vorgegebene Abmessungen und im oberen Schenkel 16 vier Bohrungen, von denen jeweils zwei ein in Längsrichtung des oberen Schenkels 16 betrachtetes Paar mit vorgegebenem Abstand einmal von 18 mm und zum anderen von 26 mm bilden. Der Elektromotor 11 mit daran befestigter Befestigungsvorrichtung 10 wird an der Halterung 14, insbesondere dem Standfuß 15, mittels Befestigungsmitteln 26, insbesondere Befestigungsschrauben, befestigt, die im oberen Schenkel 16 eines der dort vorhandenen Bohrungspaare durchsetzen. Beim gezeigten Ausführungsbeispiel greifen die Befestigungsmittel 26, insbesondere Befestigungsschrauben, in das Bohrungspaar im oberen Schenkel 16 des Standfußes 15 ein, das den kleineren Bohrungsabstand von 18 mm aufweist. Bei einem anderen, nicht gezeigten Ausführungsbeispiel greifen die Befestigungsmittel 26, insbesondere Befestigungsschrauben, statt dessen in das andere Bohrungspaar im oberen Schenkel 16 ein, bei dem die Bohrungen einen Abstand von 26 mm voneinander haben.

Die Befestigungsvorrichtung 10 weist einen Tragschenkel 19 und einen davon etwa rechtwinklig abstrebenden Befestigungsschenkel 24 auf, der mehrere Durchgangsöffnungen 25 für den Durchgriff der am Befestigungsschenkel 24 angreifenden Befestigungsmittel 26, insbesondere Befestigungsschrauben, aufweist. Dabei folgen die sowohl in Querrichtung als auch in Längsrichtung des Befestigungsschenkels 24 vorgesehenen Durchgangsöffnungen 25 in derartigen Abständen aufeinander, dass zwei Befestigungsmittel 26 mit unterschiedlichem, in Querrichtung und/oder Längsrichtung des Befestigungsschenkels 24 gemessenem, Abstand hindurchpassen. Beim gezeigten Ausführungsbeispiel haben die Durchgangsöffnungen 25, durch die die beiden Befestigungsmittel 26 hindurchreichen, einen in Längsrichtung des Befestigungsschenkels 24 gemessenen Abstand von 18 mm voneinander, gemessen von Mitte Durchgangsöffnung 25 zu Mitte Durchgangsöffnung 25. Ist das Lochmaß beim oberen Schenkel 16 des Standfußes 15 ein anderes, z.B. mit 26 mm Abstand, so durchsetzen die Befestigungsmittel 26, insbesondere Befestigungsschrauben, die benachbarten, jeweils weiter außen befindlichen Durchgangsöffnungen 25, die in Längsrichtung des Befestigungsschenkels 24 gemessen einen Abstand von 26 mm, gemessen von Mitte Durchgangsöffnung 25 zu Mitte Durchgangsöffnung 25, aufweisen.

Der Befestigungsschenkel 24 weist vier quer dazu gerichtete Reihen 27, 28 sowie 29, 30 von derartigen Durchgangsöffnungen 25 auf, von denen zwei Reihen 27, 29, in Längsrichtung des Befestigungsschenkels 24 betrachtet, einen geringeren Abstand voneinander aufweisen als die beiden anderen Reihen 28, 29. Im ersten Fall beträgt der Reihenabstand 18 mm und im zweiten Fall 26 mm, jeweils in Längsrichtung des Befestigungsschenkels 24 betrachtet.

Jede der vier Reihen 27 bis 30 weist beim gezeigten Ausführungsbeispiel drei Durchgangsöffnungen 25 auf. Statt dessen können es auch mehr oder weniger sein. Die Anzahl der Durchgangsöffnungen 25 je Reihe erhöht die Variabilität bei der Befestigung des Elektromotors 11 quer zum Längsverlauf des oberen Schenkels 16 des Standfußes 15 betrachtet. Die Vielzahl der Durchgangsöffnungen 25 je Reihe 27 bis 30 macht es also möglich, äußere sonstige Umgebungsbedingungen bei der Befestigung des Elektromotors 11 zu berücksichtigen. Beim gezeigten Ausführungsbeispiel ist ein Versatz um jeweils 5 mm, betrachtet quer zum Befestigungsschenkel 24, nach vorn oder nach hinten möglich, z.B. um einen Flügelabstand eines vom Elektromotor 11 angetriebenen Ventilators zu einem anderen Gerät, z.B. Verflüssiger oder Verdampfer, nach Wahl vorgeben zu können.

Der Befestigungsschenkel 24 weist außerdem zumindest ein Langloch 31 auf, das sich in Querrichtung des Befestigungsschenkels 24 erstreckt. Das Langloch 31 ist mittig zwischen den beidseitig davon mit Abstand verlaufenden Reihen 27, 28 sowie 29, 30 von Durchgangsöffnungen 25 angeordnet. Das Langloch 31 verläuft etwa parallel zu den jeweiligen Reihen 27 bis 30 und weist eine Länge z.B. von mindestens 22 mm auf. Das Langloch 31 macht eine Befestigung des Elektromotors 11 an der Halterung 14, insbesondere dem Standfuß 15, z.B. in der Weise möglich, dass die beiden Befestigungsmittel 26, insbesondere Befestigungsschrauben, statt beim gezeigten Ausführungsbeispiel nun das Langloch 31 durchsetzen, wobei die Längsmittelachse des Elektromotors 11 etwa parallel zum oberen Schenkel 16 des Standfußes 15 verläuft und nicht, wie beim gezeigten Ausführungsbeispiel, quer dazu.

Die Befestigungsvorrichtung 10 ist so gestaltet, dass der Bereich des Befestigungsschenkels 24, der die Durchgangsöffnungen 25 und/oder das mindestens eine Langloch 31 aufweist, als etwa kastenförmiger Mittelteil 32 ausgebildet ist, derart, dass durch die Durchgangsöffnungen 25 bzw. das mindestens eine Langloch 31 hindurchgreifende Befestigungsmittel 26, insbesondere Befestigungsschrauben, mit ihren Köpfen 33 im Kasteninneren aufnehmbar sind und nicht über die Oberseite des Befestigungsschenkels 24 störend überstehen. Zugleich bietet diese Gestaltung als etwa kastenförmiges Mittelteil 32 die Möglichkeit, entsprechende Randkonturen derart zu bilden, dass die Köpfe 33 der hindurchgreifenden Befestigungsmittel 26, insbesondere Sechskantköpfe, zumindest mit einem Kopfbereich formschlüssig in Aufnahmen, z.B. etwa V-förmige Wandteile, eingreifen und dadurch eine Verdrehsicherung der Befestigungsmittel 26 relativ zum Mittelteil 32 erreicht ist.

Der Befestigungsschenkel 24 weist beidseitige Flachteile 34 auf, die sich an beiden Enden, in Längsrichtung des Befestigungsschenkels 24 betrachtet, anschließen und ebenfalls mit Durchgangsöffnungen 35 versehen sind. Dabei weist jeder Flachteil 34 zwei quer zum Befestigungsschenkel 24 gerichtete Reihen 36, 37 bzw. 38, 39 von Durchgangsöffnungen 35 auf, wobei die Durchgangsöffnungen 35 in Längsrichtung und in Querrichtung in Abständen aufeinanderfolgen. Auch diese Flachteile 34 können mit ihren Durchgangsöffnungen 35 der Befestigung, d.h. dem Durchgriff von Befestigungsmitteln 26, insbesondere Befestigungsschrauben, an der Halterung 14 dienen.

Die Flachteile 34 sind mit dem Mittelteil 32 des Befestigungsschenkels 24 über zerbrechbare Dünnstege 40 verbunden und können dadurch nach Wunsch auch abgebrochen werden. Die Flachteile 34 weisen eine geringere Dicke als der Mittelteil 32 des Befestigungsschenkels 24 auf, wobei für die Dicke ein Maß eines Unterlegteiles vorgegeben ist und ein abgebrochener Flachteil 34 ein Unterlegteil bildet. Die Flachteile 34 weisen eine Querschnittsdicke z.B. von 3 mm auf, so dass sie, abgebrochen vom Mittelteil 32, als Unterlegteile mit einer Querschnittsdicke von 3 mm verwendet werden können, z.B. um eine Differenz zwischen unterschiedlichen Höhenmaßen, z.B. dem Höhenmaß von 48 mm und 51 mm, auszugleichen. Die im jeweiligen Flachteil 34 enthaltenen Durchgangsöffnungen 35 dienen dann dem Durchgriff der Befestigungsmittel 26, insbesondere Befestigungsschrauben, die entsprechende Durchgangsöffnungen 25 im Mittelteil 32 durchsetzen und dann auch zugeordnete Durchgangsöffnungen 35 des jeweiligen Flachteils 34 in der Benutzung als Unterlegteil passieren.

Beim gezeigten Ausführungsbeispiel liegen beim Befestigungsschenkel 24 und auch bei jedem Flachteil 34 dessen Durchgangsöffnungen 25 bzw. 35 jeder 1 Reihe 27 bis 30 bzw. 36 bis 39 auf gleicher Höhe nebeneinander. Die einzelnen Reihen 27 bis 30 bzw. 36 bis 39 haben, in Richtung der Reihe betrachtet, relativ zueinander also keinen Versatz.

Bei einem anderen, nicht gezeigten Ausführungsbeispiel statt dessen ist vorgesehen, dass bei den Durchgangsöffnungen 25, 35 des Befestigungsschenkels 24 und/oder jedes Flachteils 34 die Durchgangsöffnungen einer Reihe gegenüber denjenigen der benachbarten Reihe einen Versatz z.B. von 2,5 mm aufweisen, betrachtet in Richtung der jeweiligen Reihe. Die Durchgangsöffnungen liegen also nicht auf gleicher Höhe, sondern versetzt zueinander.

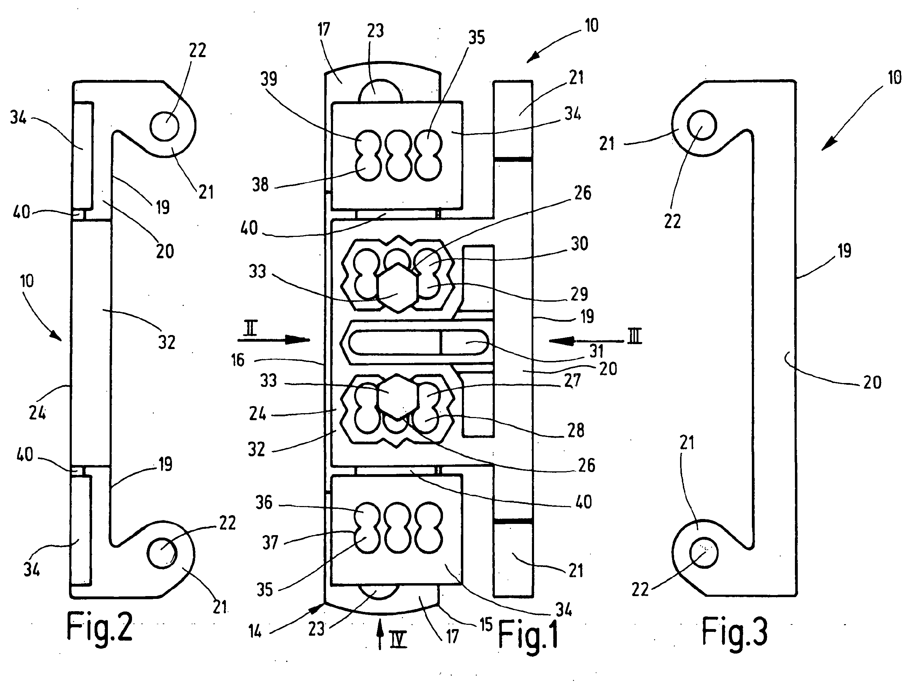

Die Befestigungsvorrichtung 10 ist so gestaltet, dass der Tragschenkel 19, von dem der Befestigungsschenkel 24 etwa rechtwinklig abstrebt, als Streifenteil 20 ausgebildet ist, der sich in Längsrichtung des Befestigungsschenkels 24 an einer Seite, in Fig. 1, 4 und 5 betrachtet, an der rechten Seite dieses, erstreckt. Dabei ist der Streifenteil 20 mit dem etwa kastenförmigen Mittelteil 32 des Befestigungsschenkels 24 einstückig verbunden. Wie insbesondere aus Fig. 2 und 3 ersichtlich ist, weist der Streifenteil 20 an beiden Enden hochragende Befestigungsaugen 21 auf, die Durchlässe 22 für die Befestigung am Elektromotor 11, z.B. an dessen Lagerendschild 13, enthalten. Bei der Befestigung der Befestigungsvorrichtung 10 am Elektromotor 11 liegt der Tragschenkel 19 mit den Befestigungsaugen 21 so, wie in Fig. 4 gezeigt ist, von außen her am Lagerendschild 13 an, wobei die zur Befestigung herangezogenen Schrauben 41 den jeweiligen Durchlass 22 im Befestigungsauge 21 durchsetzen.

Der Tragschenkel 19 und der Befestigungsschenkel 24 bilden beim gezeigten Ausführungsbeispiel ein einstückiges Formteil, insbesondere aus Kunststoff, wodurch die Befestigungsvorrichtung 10 einfach und kostengünstig verwirklicht ist. Bei der Gestaltung des einstückigen Kunststoffteiles lassen sich die einzelnen beschriebenen konstruktiven Besonderheiten einfach und kostengünstig verwirklichen.

Bei einem anderen, nicht gezeigten Ausführungsbeispiel ist die Befestigungsvorrichtung 10 einstückiger Teil des Elektromotors 11, z.B. des gezeigten Lagerendschildes 13, wobei die Befestigungsvorrichtung 10 daran angegossen ist. Bei dieser mit dem Elektromotor 11 einstückigen Gestaltung kann es je nachdem ausreichend sein, wenn nur der Befestigungsschenkel 24 beschriebener Art mit dem Elektromotor 11, z.B. dessen Lagerendschild 13, in der Weise einstückig ist, dass er in gleicher Weise wie etwa in Fig. 4 gezeigt, verläuft. Statt dessen kann aber auch der Streifenteil 20 mitsamt dem mit seinem etwa kastenförmigen Mittelteil 32 damit verbundenen Befestigungsschenkel 24 einstückiger Teil des Elektromotors 11 sein, z.B. daran angegossen sein. In all diesen Fällen ist der Elektromotor 11 somit bereits werksseitig so hergerichtet, dass vielfältige Möglichkeiten zu dessen Befestigung an der Halterung 14, insbesondere dem Standfuß 15, gegeben sind.

## Patentansprüche

1. Elektromotor, insbesondere Spaltpolmotor, mit einer Befestigungsvorrichtung (10) zur Befestigung an einer Halterung (14), z.B. einem Standfuß (15), wobei die Befestigungsvorrichtung (10) einen sich quer zur Motorachse erstreckenden länglichen Befestigungsschenkel (24) und einen vom Befestigungsschenkel (24) etwa rechtwinklig abstrebenden Tragschenkel (19) aufweist, der den Elektromotor (11) trägt, und wobei der Befestigungsschenkel (24) mehrere sowohl quer als auch parallel zur Achse des Elektromotors (11) verlaufende Reihen mit mehreren in Abständen aufeinanderfolgenden Durchgangsöffnungen (25, 35) aufweist, die für den Durchgriff von am Befestigungsschenkel (24) angreifenden Befestigungsmitteln (26), insbesondere Befestigungsschrauben, geeignet sind,
**dadurch gekennzeichnet,**
**dass** die Befestigungsvorrichtung (10) als Konsole ausgebildet ist und deren Tragschenkel (19) an einem auf einer Seite des Elektromotors (11) vorgesehenen Lagerendschild (13) angreift, dass der Befestigungsschenkel (24) vier etwa parallel zur Motorachse gerichtete Reihen (27 bis 30) von Durchgangsöffnungen (25) aufweist und dass der Bereich des Befestigungsschenkels (24), der die Durchgangsöffnungen (25) aufweist, einen Mittelteil (32) bildet, an den sich an beiden Enden in Längsrichtung jeweils Flachteile (34) anschließen, die jeweils ebenfalls mit Durchgangsöffnungen (35) versehen sind und die mit dem Mittelteil (32) über eine Sollbruchstelle bildende zerbrechbare Dünnstege (40) abbrechbar verbunden sind.

2. Elektromotor nach Anspruch 1,
**dadurch gekennzeichnet,**
**dass** jede der vier Reihen (27 bis 30) drei Durchgangsöffnungen (25) oder mehr aufweist.

3. Elektromotor nach Anspruch 1 oder 2,
**dadurch gekennzeichnet,**
**dass** der Mittelteil (32) des Befestigungsschenkels (24) zumindest ein Langloch (31) enthält, das sich in Querrichtung des Befestigungsschenkels (24) erstreckt.

4. Elektromotor nach Anspruch 3,
**dadurch gekennzeichnet,**
**dass** das Langloch (31) mittig zwischen den beidseitig davon mit Abstand verlaufenden Reihen (27,28 und 29,30) von Durchgangsöffnungen (25) angeordnet ist.

5. Elektromotor nach Anspruch 3 oder 4,
**dadurch gekennzeichnet,**
**dass** das Langloch (31) eine Länge von mindestens 22 mm aufweist.

6. Elektromotor nach einem der Ansprüche 1 bis 5,
**dadurch gekennzeichnet,**
**dass** zwei innere Reihen (27, 28) der Durchgangsöffnungen (25) einen Abstand von 18 mm, gemessen von Mitte Durchgangsöffnung (25) zur Mitte Durchgangsöffnung (25), und die beiden anderen äußeren Reihen (28, 30) einen Abstand von 26 mm, gemessen von Mitte Durchgangsöffnung (25) zur Mitte Durchgangsöffnung (25), voneinander aufweisen.

7. Elektromotor nach einem der Ansprüche 3 bis 6,
**dadurch gekennzeichnet,**
**dass** der Mittelteil (32) etwa kastenförmig ausgebildet ist, derart, dass durch die Durchgangsöffnungen (25) bzw. das mindestens eine Langloch (31) hindurchgreifende Befestigungsmittel (26), insbesondere Befestigungsschrauben, mit ihren Köpfen (33) im von Wänden begrenzten Kasteninneren aufnehmbar sind.

8. Elektromotor nach Anspruch 1,
**dadurch gekennzeichnet,**
**dass** jeder Flachteil (34) zwei quer zum Befestigungsschenkel (24) gerichtete Reihen (36, 37 bzw. 38, 39) von Durchgangsöffnungen (35) aufweist, wobei die Durchgangsöffnungen (35) in Längsrichtung und in Querrichtung in Abständen aufeinanderfolgen.

9. Elektromotor nach einem der Ansprüche 1 bis 8,
**dadurch gekennzeichnet,**
**dass** die Flachteile (34) eine geringere Dicke als der Mittelteil (32) des Befestigungsschenkels (24) aufweisen und ein vom Mittelteil (32) abgebrochener Flachteil als ein Unterlegteil verwendbar ist.

10. Elektromotor nach Anspruch 1,
**dadurch gekennzeichnet,**
**dass** die Flachteile (34) eine Querschnittsdicke von 3 mm aufweisen.

11. Elektromotor nach einem der Ansprüche 1 bis 10,
**dadurch gekennzeichnet,**
**dass** bei den Durchgangsöffnungen (24, 35) des Mittelteils (32) und/oder jedes Flachteils (34) die Durchgangsöffnungen einer Reihe gegenüber denjenigen der benachbarten Reihe einen Versatz, betrachtet in Richtung der Reihe, aufweisen, der z. B. 2,5 mm beträgt.

12. Elektromotor nach einem der Ansprüche 1 bis 11,
**dadurch gekennzeichnet,**
**dass** der Tragschenkel (19) als länglicher Streifenteil (20) ausgebildet ist, der sich in Längsrichtung des Befestigungsschenkels (24) an einer Seite desselben erstreckt.

13. Elektromotor nach Anspruch 12,
**dadurch gekennzeichnet,**
**dass** der Streifenteil (20) mit dem etwa kastenförmigen Mittelteil (32) des Befestigungsschenkels (24) einstückig verbunden ist.

14. Elektromotor nach Anspruch 12 oder 13,
**dadurch gekennzeichnet,**
**dass** der Streifenteil (20) an beiden Enden quer dazu gerichtete Befestigungsflansche (21) aufweist, die Durchlässe (22) enthalten, welche der Befestigung am Lagerendschild (13) des Elektromotors (11) dienen.

15. Elektromotor nach einem der Ansprüche 1 bis 14,
**dadurch gekennzeichnet,**
**dass** der Tragschenkel (19) und der Befestigungsschenkel (24) ein einstückiges Formteil, insbesondere aus Kunststoff, bilden.

16. Elektromotor nach einem der Ansprüche 12 bis 15,
**dadurch gekennzeichnet,**
**dass** der Streifenteil (20) mitsamt dem über seinen Mittelteil (32) damit verbundenen Befestigungsschenkel (24) einstückiger Teil des Lagerendschildes (13) des Elektromotors (11) ist, insbesondere daran angegossen ist.

## Claims

1. Electric motor, in particular shaded-pole motor, with a fixing apparatus (10) for fixing it on a holder (14), for example a stand (15), the fixing apparatus (10) having a longitudinal fixing limb (24), which extends transversely with respect to the motor axis, and a bearing limb (19), which struts approximately at right angles from the fixing limb (24) and bears the electric motor (11), and the fixing limb (24) having a plurality of rows, which run both transversely and parallel with respect to the axis of the electric motor (11), with a plurality of through-openings (25, 35), which follow on from one another with spacings and are suitable for fixing means (26), in particular fixing screws, acting on the fixing limb (24) to pass through, **characterized in that** the fixing apparatus (10) is in the form of a bracket and its bearing limb (19) acts on a mount end plate (13) provided on one side of the electric motor (11), **in that** the fixing limb (24) has four rows (27 to 30), which are directed approximately parallel to the motor axis, of through-openings (25), and **in that** the region of the fixing limb (24) which has the through-openings (25) forms a central part (32), which is adjoined at both ends in the longitudinal direction by in each case flat parts (34), which are each likewise provided with through-openings (35) and which can be connected detachably to the central part (32) via breakable thin webs (40) which form a predetermined breaking point.

2. Electric motor according to Claim 1, **characterized in that** each of the four rows (27 to 30) has three through-openings (25) or more.

3. Electric motor according to Claim 1 or 2, **characterized in that** the central part (32) of the fixing limb (24) contains at least one slot (31), which extends in the transverse direction of the fixing limb (24).

4. Electric motor according to Claim 3, **characterized in that** the slot (31) is arranged centrally between the rows (27, 28 and 29, 30), which run on both sides thereof with a spacing, of through-openings (25).

5. Electric motor according to Claim 3 or 4, **characterized in that** the slot (31) has a length of at least 22 mm.

6. Electric motor according to one of Claims 1 to 5, **characterized in that** two inner rows (27, 28) of the through-openings (25) have a spacing from one another of 18 mm, measured from the centre of through-opening (25) to the centre of through-opening (25), and the two other outer rows (28, 30) have a spacing from one another of 26 mm, measured from the centre of through-opening (25) to the centre of through-opening (25).

7. Electric motor according to one of Claims 3 to 6, **characterized in that** the central part (32) is designed approximately in the form of a box in such a way that fixing means (26), in particular fixing screws, which engage through the through-openings (25) or the at least one slot (31), can be accommodated by means of their heads (33) in the box interior, which is delimited by walls.

8. Electric motor according to Claim 1, **characterized in that** each flat part (34) has two rows (36, 37 and 38, 39), which are directed transversely with respect to the fixing limb (24), of through-openings (35), the through-openings (35) following on from one another with spacings in the longitudinal direction and in the transverse direction.

9. Electric motor according to one of Claims 1 to 8, **characterized in that** the flat parts (34) have a smaller thickness than the central part (32) of the fixing limb (24), and a flat part which has been detached from the central part (32) can be used as a spacer part.

10. Electric motor according to Claim 1, **characterized in that** the flat parts (34) have a cross-sectional thickness of 3 mm.

11. Electric motor according to one of Claims 1 to 10, **characterized in that**, in the case of the through-openings (24, 35) of the central part (32) and/or of each flat part (34), the through-openings in one row have an offset, when viewed in the direction of the row, with respect to those of the adjacent row which is, for example, 2.5 mm.

12. Electric motor according to one of Claims 1 to 11, **characterized in that** the bearing limb (19) is in the form of an elongate strip part (20), which extends in the longitudinal direction of the fixing limb (24) on one side thereof.

13. Electric motor according to Claim 12, **characterized in that** the strip part (20) is integrally connected to the approximately box-shaped central part (32) of the fixing limb (24).

14. Electric motor according to Claim 12 or 13, **characterized in that** the strip part (20) has, at both ends, fixing flanges (21), which are directed transversely with respect thereto and contain passages (22), which are used for the fixing to the mount end plate (13) of the electric motor (11).

15. Electric motor according to one of Claims 1 to 14, **characterized in that** the bearing limb (19) and the fixing limb (24) form an integral moulded part, in particular made of plastic.

16. Electric motor according to one of Claims 12 to 15, **characterized in that** the strip part (20) together with the fixing limb (24), which is connected thereto via its central part (32), is an integral part of the mount end plate (13) of the electric motor (11), and in particular is cast integrally with it.

## Revendications

1. Moteur électrique, notamment moteur à pôles fendus, comprenant un dispositif de fixation (10) pour la fixation à un support (14), par exemple un pied (15), le dispositif de fixation (10) présentant une branche de fixation allongée (24) s'étendant transversalement à l'axe du moteur et une branche de support (19) partant approximativement à angle droit depuis la branche de fixation (24) et portant le moteur électrique (11), la branche de fixation (24) présentant plusieurs rangées s'étendant à la fois transversalement et parallèlement à l'axe du moteur électrique (11) avec plusieurs ouvertures de passage (25, 35) successives espacées, qui sont prévues pour permettre le passage de moyens de fixation (26), notamment des vis de fixation, s'engageant avec la branche de fixation (24),
**caractérisé en ce que**
le dispositif de fixation (10) est réalisé sous forme de console et sa branche de support (19) s'engage avec un panneau d'extrémité de support (13) prévu sur un côté du moteur électrique (11), **en ce que** la branche de fixation (24) présente quatre rangées (27 à 30) d'ouvertures de passage (25) orientées approximativement parallèlement à l'axe du moteur et **en ce que** la région de la branche de fixation (24) qui présente les ouvertures de passage (25) forme une partie centrale (32) à laquelle se raccordent, aux deux extrémités dans la direction longitudinale, des parties plates respectives (34) qui sont pourvues également chacune d'ouvertures de passage (35) et qui sont connectées à la partie centrale (32) de manière sectionnable par le biais d'une mince nervure (40) cassable formant une zone destinée à la rupture.

2. Moteur électrique selon la revendication 1,
**caractérisé en ce que**
chacune des quatre rangées (27 à 30) présente trois ouvertures de passage (25) ou plus.

3. Moteur électrique selon la revendication 1 ou 2,
**caractérisé en ce que**
la partie centrale (32) de la branche de fixation (24) contient au moins un trou oblong (31) qui s'étend dans la direction transversale de la branche de fixation (24).

4. Moteur électrique selon la revendication 3,
**caractérisé en ce que**
le trou oblong (31) est disposé centralement entre les rangées (27, 28 et 29, 30) d'ouvertures de passage (25) s'étendant de part et d'autre de celui-ci de manière espacée.

5. Moteur électrique selon la revendication 3 ou 4,
**caractérisé en ce que**
le trou oblong (31) présente une longueur d'au moins 22 mm.

6. Moteur électrique selon l'une quelconque des revendications 1 à 5,
**caractérisé en ce que**
deux rangées intérieures (27, 28) des ouvertures de passage (25) présentent un espacement mutuel de 18 mm, mesuré depuis le centre de l'ouverture de passage (25) jusqu'au centre de l'ouverture de passage (25), et les deux autres rangées extérieures (28, 30) présentent un espacement mutuel de 26 mm, mesuré depuis le centre de l'ouverture de passage (25) jusqu'au centre de l'ouverture de passage (25).

7. Moteur électrique selon l'une quelconque des revendications 3 à 6,
**caractérisé en ce que**
la partie centrale (32) est réalisée approximativement en forme de caisse, de telle sorte que des moyens de fixation (26), en particulier des vis de fixation s'engageant à travers les ouvertures de passage (25), ou à travers l'au moins un trou oblong (31), puissent être reçus avec leurs têtes (33) dans l'intérieur de la caisse délimité par des parois.

8. Moteur électrique selon la revendication 1,
**caractérisé en ce que**
chaque partie plate (34) présente deux rangées (36, 37 ou 38, 39) d'ouvertures de passage (35) orientées transversalement à la branche de fixation (24), les ouvertures de passage (35) se suivant dans la direction longitudinale et dans la direction transversale avec des espacements mutuels.

9. Moteur électrique selon l'une quelconque des revendications 1 à 8,
**caractérisé en ce que**
les parties plates (34) présentent une plus faible épaisseur que la partie centrale (32) de la branche de fixation (24) et une partie plate sectionnée de la partie centrale (32) peut être utilisée comme pièce de support.

10. Moteur électrique selon la revendication 1,
**caractérisé en ce que**
les parties plates (34) présentent une épaisseur en section transversale de 3 mm.

11. Moteur électrique selon l'une quelconque des revendications 1 à 10,
**caractérisé en ce que**
dans le cas des ouvertures de passage (24, 35) de la partie centrale (32) et/ou de chaque partie plate (34), les ouvertures de passage d'une rangée présentent, par rapport à celles de la rangée adjacente, un décalage de 2,5 mm par exemple, considéré dans la direction de la rangée.

12. Moteur électrique selon l'une quelconque des revendications 1 à 11,
**caractérisé en ce que**
la branche de support (19) est réalisée sous forme de partie en bande allongée (20) qui s'étend dans la direction longitudinale de la branche de fixation (24) d'un côté de celle-ci.

13. Moteur électrique selon la revendication 12,
**caractérisé en ce que**
la partie en bande (20) est connectée d'une seule pièce avec la partie centrale (32) approximativement en forme de caisse de la branche de fixation (24).

14. Moteur électrique selon la revendication 12 ou 13,
**caractérisé en ce que**
la partie en bande (20) présente, aux deux extrémités, des brides de fixation (21) orientées à angle droit par rapport à ces extrémités, lesquelles contiennent des orifices (22) qui servent à la fixation au panneau d'extrémité de support (13) du moteur électrique (11).

15. Moteur électrique selon l'une quelconque des revendications 1 à 14,
**caractérisé en ce que**
la branche de support (19) et la branche de fixation (24) forment une pièce moulée d'une seule pièce, notamment en plastique.

16. Moteur électrique selon l'une quelconque des revendications 12 à 15,
**caractérisé en ce que**
la partie en bande (20), conjointement avec la branche de fixation (24) connectée à elle par le biais de sa partie centrale (32), fait partie intégrante du panneau d'extrémité de support (13) du moteur électrique (11), notamment est coulée sur celui-ci.
